# EUROPÄISCHE PATENTSCHRIFT

(11) **EP 1 423 689 B1**
(45) Veröffentlichungstag und Bekanntmachung des Hinweises auf die Patenterteilung: **28.12.2005**
(21) Anmeldenummer: 02754385.9
(22) Anmeldetag: 18.07.2002
(51) Int. Cl.: G01N 29/22

(54) **VORRICHTUNG ZUR ROHRPRÜFUNG MITTELS ULTRASCHALL**
DEVICE FOR INSPECTING PIPES USING ULTRASOUND
DISPOSITIF POUR CONTROLER DES TUYAUX AU MOYEN D'ULTRASONS

(30) Priorität: 29.08.2001 DE 10141768
(43) Veröffentlichungstag der Anmeldung: 02.06.2004
(73) Patentinhaber: GE Inspection Technologies GmbH, 50354 Hürth (DE); Prause, Reinhard, 53757 St. Augustin (DE)
(72) Erfinder: PRAUSE, Reinhard, 53757 St. Augustin (DE)
(74) Vertreter: Bauer, Wulf
(86) Internationale Anmeldenummer: PCT/DE2002/002639
(87) Internationale Veröffentlichungsnummer: WO 2003/027664

(56) Entgegenhaltungen:
- EP-A- 0 398 002
- WO-A-02/35226
- DE-A- 3 803 151
- US-A- 4 246 794

## Beschreibung

Die Erfindung bezieht sich auf Vorrichtung zur Rohrprüfung mittels Ultraschall, mit mindestens einem Ultraschallprüfkopf und mit einem Prüftank, a) der einen Aufnahmeraum hat, welcher zur Aufnahme einer Ankopplungsflüssigkeit, insbesondere Wasser, bestimmt ist, b) der eine axiale Passage ausbildet, durch welche ein zu prüfendes Rohr entlang einer Prüflinie relativ zum Prüftank transportiert werden kann, c) der frontseitige und endseitige Dichtmittel hat, die dem Außendurchmesser des zu prüfendem Rohrs angepasst sind und die den Aufnahmeraum begrenzen, und d) der den mindestens einen Prüfkopf aufnimmt, so dass sich zwischen Prüfkopf und zu prüfendem Rohr nur Ankopplungsflüssigkeit befindet.

Eine derartige Vorrichtung zur Rohrprüfung ist aus PCT/DE 00/03747 bekannt. Sie ist weiterhin bekannt aus dem DE-Buch J. und J. Krautkrämer, Werkstoffprüfung mit Ultraschall, Springer Verlag, fünfte Auflage.

US 4 246 794 beschreibt ebenfalls eine derartige Vorrichtung zur Rohrprüfung. Zur Abdichtung der Verbindung zwischen zwei benachbarten, zu prüfenden Rohren, wird dabei ein zylindrischer Dorn in ein Rohrende eingesetzt. Er hat eine zylindrische Außenwand, die dem Außendurchmesser des zu prüfenden Rohres entspricht. Über O-Ringe erfolgt eine Abdichtung gegenüber der Innenwand des zu prüfenden Rohres.

Bei den vorbekannten Vorrichtungen zur Rohrprüfung lässt sich nicht das gesamte Rohr prüfen. Jeweils am Anfang und am Ende verbleiben nicht geprüfte Bereiche. Diese habe typischer Weise eine Länge von 50 - 200 mm. Um vollständig, also über die gesamte axiale Länge geprüfte Rohre produzieren zu können, müssen nach dem Stand der Technik die ungeprüften Bereiche abgeschnitten werden.

Dies ist nachteilig. Das Abschneiden ungeprüfter Endbereiche eines Rohres bedeutet einen erheblichen Verlust.

Um zu vermeiden, dass jeweils ungeprüfte Rohr - Endbereiche verbleiben und abgeschnitten werden müssen, ist bereits vorgeschlagen worden, die Rohrenden in die Prüfung mit ein zu beziehen. Dabei ergibt sich das Problem, die offenen Rohrenden abzudichten. Es muss sehr sorgfältig darauf geachtet werden, dass die Innenwände des zu prüfenden Rohres trocken bleiben. Auch geringe Wassermengen im Innenraum des Rohres, beispielsweise ein Tropfen, würden sich bei der Ultraschallprüfung bemerkbar machen, sie liefern falsche Ultraschallsignale an der mit Wasser benetzten Stelle.

Bei Vollmaterial ist diese geschilderte Gefahr nicht gegeben. Dennoch ist eine Prüfung von Vollmaterial mit den Vorrichtungen nach dem Stand der Technik nicht ohne weiteres möglich. Für die Prüfung muss der Aufnahmeraum des Prüftanks immer ausreichend mit Ankopplungsflüssigkeit gefüllt sein.

Ein zu prüfendes Stangenmaterial, sei es nun ein Rohr oder Vollmaterial, muss entlang der Prüflinie, die horizontal verläuft, in den Prüftank eingeführt werden, damit er entlang der axialen Passage den Aufnahmeraum durchlaufen kann. Die axiale Passage muss aber irgendwie an ihren beiden Enden abgedichtet sein, damit dort nicht ständig Ankopplungsflüssigkeit ausläuft. Die endseitigen Dichtungsmittel sind dazu geeignet sich an den Außenumfang des zu prüfenden Stangenmaterials anzulegen. Es genügt nicht aus, die Passage in Richtung der Prüflinie so ausreichend abzudichten, dass immer genügend Ankopplungsflüssigkeit im Aufnahmeraum verbleibt.

Es kommt also nicht auf eine exakte Abdichtung zwischen den Dichtmitteln und dem zu prüfenden Stangenmaterial an, es kann durchaus gewisser Spalt zwischen Dichtmittel und Rohr verbleiben, sofern nicht so viel Abkopplungsflüssigkeit ausläuft, dass ein notwendiger Wasserstand im Aufnahmeraum nicht mehr aufrecht erhalten werden kann.

Hier setzt nun die Erfindung ein. Sie hat es sich zur Aufgabe gemacht, die Vorrichtung zur Rohrprüfung der eingangs genannten Art dahingehend weiter zu bilden, dass eine Prüfung von Endbereichen möglich ist.

Ausgehend von der Vorrichtung der eingangs genannten Art wird diese Aufgabe dadurch gelöst, dass ein zylindrischer Dorn vorgesehen ist, der in seinem Außendurchmesser dem Außendurchmesser des zu prüfenden Rohres angepasst ist, der eine stirnseitige Dichtung hat, mit der er in dichtendem Kontakt mit einer ersten Stirnseite des zu prüfenden Rohrs ist, und der eine Länge hat, die größer ist als der lichte Abstand der beiden Dichtmittel.

Die Erfindung eignet sich zwar bevorzugt für die Prüfung von Rohren, sie ist aber grundsätzlich für die Prüfung von Stangenmaterial geeignet, also auch für die Prüfung von Vollmaterial. Sie eignet sich vorzugsweise für rundes Material, ist aber ebenso für prismatische Körper aller Art geeignet, also Körper mit konstantem Querschnitt über ihre Länge.

Der Dorn hat den selben Querschnitt wie der Prüfling, also insbesondere den selben Außendurchmesser wie das zu prüfende Rohr. Die Aufgabe des Dorns ist es, den Früftank nach aussen hin abzudichten, sowohl dann, wenn keine Prüfung stattfindet als auch während der Prüfung. Der Dorn verlängert gewissermaßen den Prüfling in axialer Richtung, also in Richtung der Prüflinie. Dadurch wird der Ort, wo keine Prüfung stattfinden kann, in den Bereich des Dorn verlagert. Er befindet sich nun nicht mehr im Endbereich des Prüflings, also des zu prüfenden Rohrs.

Vor Beginn einer Prüfung füllt der Dorn die Passage aus. Dadurch kann im Prüftank die notwendige Füllmenge an Ankopplungsflüssigkeit aufrecht erhalten werden, geht jedenfalls durch die beiden Dichtmittel nur soviel Ankopplungsflüssigkeit verloren, wie sie einfach über eine Pumpe ersetzt werden kann. Bei Beginn einer Prüfung wird zunächst außerhalb eines Prüftanks eine dichte Verbindung zwischen dem zu prüfenden Rohr und dem Dorn hergestellt. Dabei wird erreicht, dass der Endbereich des zu prüfenden Rohres dicht abgeschlossen ist. In diesem Zustand wird der Endbereich des zu prüfenden Rohres nun in den Prüftank eingeführt, wo die Prüfung stattfinden kann. Das zu prüfende Rohr tritt dabei durch das frontseitige Dichtmittel in den Prüftank ein. Bei fortschreitender Prüfung wird es soweit transportiert werden, dass es das endseitige Dichtmittel erreicht. In diesem Zustand ist der Dorn nun eigentlich nicht mehr nötig. Das Rohr kann noch weiter transportiert und die Prüfung weiter durchgeführt werden über die gesamte Rohrlänge. Um den hinteren Endbereich prüfen zu können, ist auch dort ein Dorn notwendig.

Alternativ wird aber lediglich der vorn liegende Endbereich des Rohres geprüft und wird mit Vorrichtungen nach dem Stand der Technik, die separat von der Rohrendprüfung vorgesehen sind, überlappend der Bereich zwischen den Endbereichen geprüft. Hierfür ist es vorteilhaft, für jedes Rohrende jeweils eine separate Vorrichtung zu Rohrendprüfung vorzusehen.

Die erfindungsgemäße Vorrichtung hat den Vorteil, dass betriebssicher eine Prüfung von Endbereichen eines Rohrs stattfinden kann und wahlweise entweder die Prüfung auch des Hauptbereiches durchgeführt wird oder aber lediglich die Endbereichprüfung erfolgt. Die Abdichtung des Prüftanks durch den Dorn ist stehts gewährleistetet. Dies ermöglicht es, unterschiedliche Prüftanks für die Erfindung einzusetzen. So kann beispielsweise nach der sogenannten "Pfützentechnik" gearbeitet werden, bei der das Rohr nur teilweise in Ankopplungsflüssigkeit eingetaucht ist und die Prüfung nur von unten, der sogenannten Sechs-Uhr-Position, erfolgen kann. Man kann aber auch mit Prüftanks arbeiten, die das zu prüfende Rohr vollständig aufnehmen, also es auf seiner gesamten Außenwahndung benetzten. Hier kommen insbesondere Vorrichtungen nach der genannten PCT/DE 00/03747 in Betracht. Es ist auch möglich, einen rotierenden Tank zu verwenden, wie er beispielsweise aus der DE 4 410 580 A bekannt ist.

In vorteilhafter Weiterbildung der Erfindung sind die beiden Dichtmittel lösbar am Prüftank angeordnet. Dadurch ist es möglich, das jeweils passende Dichtmittel für das jeweils zu prüfende Rohr auszuwählen und einzusetzen.

In bevorzugter Ausbildung hat der Dorn an seiner anderen Stirnseite ein Haltemittel. Es ist eine Haltevorrichtung für den Dorn vorgesehen, die ein Spannmittel aufweist. Das Spannmittel wirkt mit dem Haltemittel zusammen. Auf diese Weise kann der Dorn über die Haltevorrichtung gehalten und manipuliert werden. Weiterhin können unterschiedliche Dorne eingesetzt werden, also Dorne mit unterschiedlichen Querschnitten und / oder unterschiedlichen Außenabmessungen.

In bevorzugter Weiterbildung ist die Haltevorrichtung des Dorns relativ zum Prüftank in Richtung der Prüflinie verschiebbar angeordnet. Auf diese Weise ist es möglich, das Rohr relativ zum Prüftank zu bewegen. Grundsätzlich kann entweder der Prüftank in Richtung der Prüflinie verschiebbar angeordnet sein und / oder es kann das Rohr in Richtung der Prüflinie verschiebbar angeordnet sein.

In einer bevorzugten Weiterbildung ist die Haltevorrichtung drehbar um die Prüflinie angeordnet. Auf diese Weise kann der Dorn zusammen mit dem an ihm angekoppelten, zu prüfenden Rohr gedreht werden. Eine derartige Drehbewegung ist beispielsweise bei der Prüfung nach der Pfützentechnik notwendig, wenn man den gesamten Umfang des Rohres prüfen will. Bei einer Prüfung mit einem rotierendem Wassermantel ist eine Drehung des zu prüfenden Rohres nicht notwendig.

Weiterhin hat es sich als vorteilhaft erwiesen, dass die Haltevorrichtung in Richtung der Prüflinie eine axiale Kraft auf den Dorn ausübt, hierzu ist ein Vorspannmittel vorgesehen, dass der Haltevorrichtung zugeordnet ist. Das zu prüfende Rohr ist so in einer Transportvorrichtung gehalten, dass eine axiale Kraft auf das zu prüfende Rohr ausgeübt werden kann. Durch das Vorspannmittel wird die stirnseitige Dichtung der Dorns so gegen die erste (vom liegende) Stirnseite des zu prüfenden Rohrs gedrückt, dass ein dichter Abschluss erreicht wird. Auf diese Weise wird ein Zutritt von Wasser in den Innenraum des Rohres vermieden.

Alternativ kann die stirnseitige Dichtung auch so ausgebildet werden, dass sie in radialer Richtung expandierbar ist und auf diese Weise am Innenmantel des Endbereiches des zu prüfenden Rohres dicht anlegt. Beispielsweise kann hier eine aufblasbare Dichtung, wie ein zylindrisches Dichtkissen, oder ,ein normales Rohrdichtkissen, genutzt werden.

In vorzugsweise Weiterbildung ist die Haltevorrichtung vertikal und damit quer zur Prüflinie relativ zum Prüftank höhenverstellbar. Auf diese Weise kann entweder die Haltevorrichtung relativ zum Prüftank in der Höhe verstellt werden. Dies bei Prüfungen mit der Pfützentechnik vorteilhaft. Es kann aber alternativ auch der Prüftank vertikal relativ zur Haltevorrichtung verstellbar sein.

Schließlich hat es sich als vorteilhaft herausgestellt, dass das zu prüfende Rohr in einer Transportvorrichtung, die einerseits einen Transport des Rohres axial zur Prüflinie und andererseits eine Drehung des Rohres um die Prüflinie und damit seine Rohrachse ermöglicht. Dadurch werden die mechanischen Anforderungen an die eigentliche Prüfvorrichtung verringert.

Weitere vorteilhafte Merkmale der Erfindung ergeben sich aus den übrigen Ansprüchen sowie der nun folgenden Beschreibung nicht einschränkend zu verstehender Ausführungsbeispiele der Erfindung, die im folgenden unter Bezugnahme auch die Zeichnung näher erläutert werden. In dieser Zeichnung zeigen:
- Fig. 1:: Eine teilweise schnittbildliche Seitenansicht einer Vorrichtung zur Rohrprüfung mittels Ultraschall, gezeigt ist der Zustand, bei dem sich ein zylindrischer Dorn innerhalb des Prüftanks befindet und diesen axial abschließt,
- Fig. 2:: eine Darstellung wie Fig. 1, gezeigt ist aber nunmehr der Zustand, bei dem sich eine Verbindungsstelle zwischen Dorn und einem zu prüfenden Rohr innerhalb des Prüftanks befindet,
- Fig. 3:: eine Darstellung wie Fig. 1, gezeigt ist aber nunmehr der Zustand, bei dem die Verbindungsstelle zwischen Dorn und zu prüfendem Rohr den Prüftank durchlaufen hat und sich nur noch das zu prüfende Rohr im Prüftank befindet,
- Fig. 4:: eine Seitenansicht ähnlich Fig. 1 einer Vorrichtung, die in Pfützentechnik arbeitet, gezeigt ist wie in Fig. 1 der Zustand, bei dem der Dorn den Prüftank axial abschließt,
- Fig. 5:: einen Querschnitt der Anordnung gemäß Fig. 4,
- Fig. 6:: ein Schnittbild eines Dorns mit relativ großem Durchmesser,
- Fig. 7:: ein Schnittbild wie Fig. 6 eines Dorns, diesmal mit kleinerem Durchmesser.

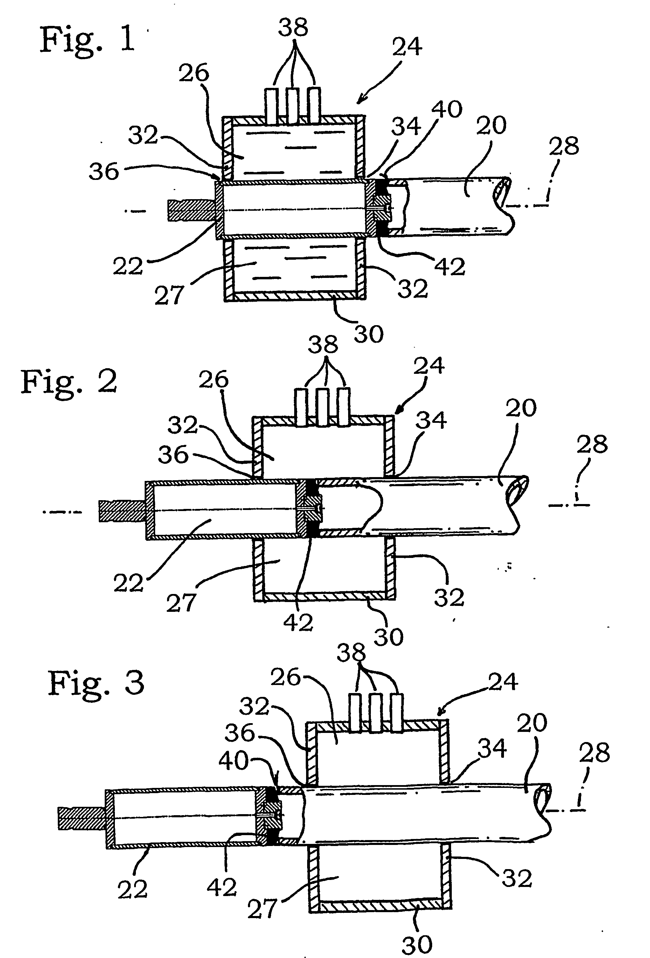

Das erste Ausführungsbeispiel nach den Figuren 1 bis 3 zeigt ein Rohr 20, dessen Endbereich mittels Ultraschall geprüft werden soll. Dieser Endbereich ist in unmittelbarem und dichtendem Kontakt mit einem Dorn 22 gleichen Außendurchmessers. Dieser Dorn befindet sich innerhalb eines Prüftanks 24, der einen zylindrischen Aufnahmeraum 26 begrenzt. Der Aufnahmeraum 26 ist mit Wasser 27 vollständig ausgefüllt. Der Prüftank 24 bildet eine axiale Passage für das zu prüfende Rohr 20 und den an das Rohr angekoppelten Dorn 22 aus. Wie der Prüftank 24 ist auch die Passage um eine Achse 28 zentriert, die im folgenden als Prüflinie bezeichnet wird. Sie ist strichpunktiert eingezeichnet.

Der Prüftank 24 besteht im wesentlichen aus einem zylindrischen Mantel 30 und zwei Seitenringen 32, die mit dem Mantel 30 einerseits lösbar und andererseits dicht verbunden sind. Sie haben jeweils einen zentrischen Durchlass für das Rohr 20 bzw. den Dorn 22 und dort, im Bereich des Durchlasses Dichtmittel 34 bzw. 36. Diese Dichtmittel 34, 36 begrenzen die axiale Passage.

Im Mantel 30 sind Ultraschallprüfköpfe so angeordnet, dass sie mit ihrer aktiven Fläche zur Prüflinie hinweisen. Zwischen diesen Ultraschallprüfköpfen und dem Rohr 20 bzw. Dorn 22 befindet sich nur Ankopplungsflüssigkeit, also Wasser 27.

In einer ersten Ausbildung rotiert der Prüftank 24 um die Achse 28, derartige Rohrprüfanlagen sind beispielsweise aus dem eingangs genannten DE-Buch bekannt. In einer anderen Ausführung ist der Prüftank 24 stationär und rotiert der im Aufnahmeraum 26 befindliche Wassermantel um das Rohr 20 bzw. den Dorn 22. Derartige Vorrichtungen sind aus der eingangs genannten PCT/DE 00/03747 bekannt.

Das zu prüfende Rohr 20 wird entlang der Prüflinie 28 transportiert, wie im folgenden beschrieben wird:

Hierzu wird das Rohr 20 an seinem rechten Endbereich (nicht dargestellt) gehalten und axial bewegt. Ebenso wird der Dorn 22 so gehalten, dass er sich axial bewegen kann. Dabei wird zwischen Dorn 22 und Rohr 20 eine in Axialrichtung wirkende Kraft aufgebracht, die eine erste Stirnseite 40 des Rohrs 20 an eine frontseitige Stirnseite des Dorns 22 drückt, die mit einer stirnseitigen Dichtung 42 versehen ist. Diese ist beispielsweise aus Gummi oder einem anderem elastischen Material hergestellt. Sie hat eine abgeschrägte, konische Frontfläche, um einen Linienkontakt mit der ersten Stirnseite 40 des Rohres 20 zu erzielen. Entscheidend ist eine Abdichtung, die einen Eintritt von Wasser in den Innenraum des Rohres 20 verhindert. Insoweit ist die Ausbildung der stirnseitigen Dichtung 42 beliebig, so lange sie dem Zweck der Abdichtung gegenüber der ersten Stirnseite 40 dient.

Im Zustand, wie er in Fig. 1 gezeigt ist, füllt der Dorn 22 die axiale Passage des Prüftanks 24 vollständig aus. In diesem Zustand sorgt allein der Dorn 22 dafür, dass Wasser nicht an den Öffnungen, die durch die Dichtmittel 34, 36 begrenzt sind, ausfließen kann. In diesem Zustand ist es also unerheblich, ob ein Rohr 20 mit dem Dorn 22 verbunden ist oder nicht. Der Zustand gemäß Fig. 1 ist daher die Ruheposition der Prüfvorrichtung. Es ist grundsätzlich möglich, bereits im Zustand nach Fig. 1 eine Ultraschallprüfung durchzuführen. Es würde in diesem Fall der Dorn 22 geprüft.

Wie insbesondere Fig. 1 zeigt ist der Dorn 22 länger als die axiale Passage, so dass er diese an beiden Enden ausfüllen kann. Der Dorn 22 hat die gleichen Außenabmessungen wie das zu prüfende Rohr. Soll beispielsweise ein Rohr 20 mit sechseckigem Außenquerschnitt geprüft werden, ist auch der Dorn 22 an seiner Außenfläche sechseckig. Dann sind auch die Dichtmittel 34, 36 auf einer sechseckigen Linie angeordnet.

Wird anstelle eines Rohrs 20 ein Stabmaterial geprüft, kommt es auf die Abdichtung nicht an, kann also die stirnseitige Dichtung 42 entfallen. Nach wie vor muss aber der Außenquerschnitt des Dorns 22 mit dem Außenquerschnitt des zu prüfenden Stangenmaterial übereinstimmen. Nach wie vor müssen auch beide gleichachsig angeordnet sein.

Im Zustand gemäß Fig. 2 ist die Einheit aus Rohr 20 und Dorn 22 ein Stück nach links verschoben, so dass nunmehr die Kontakt von Rohr 20 und Dorn 22 sich innerhalb des Aufnahmeraums 26 befindet. Die Anordnung ist so, dass der rechte und der mittlere der gezeigten drei Prüfköpfe 38 bereits den Endbereicht des Rohres 20 prüfen können, während der linke der drei Prüfköpfe 38 noch den Dorn 22 trifft. Dadurch wird ersichtlicht, dass das Rohr 20 bis zu seiner ersten Stirnseite 40 geprüft werden kann, ohne dass ungeprüfte Bereiche verbleiben. Bei der Prüfung wird das Rohr 20 zusammen mit dem Dorn 22 nach links transportiert. Fig. 2 zeigt einen Zustand, bei dem das frontseitige Dichtmittel 34 in Kontakt mit dem Rohr 20 ist, während das endseitige Dichtmittel 36 noch immer in Kontakt mit dem Dorn 22 ist.

Fig. 3 zeigt nun einen Zustand, bei dem das zu prüfende Rohr 20 vollständig die axiale Passage des Aufnahmeraums 26 ausfüllt und ein schon geprüfter Endbereich des Rohr 20 aus dem Prüftank 24 herausragt. In diesem Zustand wird der Dorn 22 grundsätzlich nicht mehr benötigt. Allein durch das Rohr 20 erfolgt die Abdichtung des Aufnahmeraums 26 nach aussen. Es ist ersichtlich, dass bei Transport des Rohres 20 zu dem weiter nach links das Rohr 20 über seine gesamte Länge geprüft werden kann bis zu einem rechten, hier nicht dargestellten Endbereich. Bringt man auch am rechten Endbereich einen Dorn 22 an, kann auch der rechte Endbereich gleich im selben Durchlauf geprüft werden.

Will man die Vorrichtung nach den Fig. 1 bis 3 an ein Rohr 20 oder ein Stangenmaterial mit anderem Querschnitt als dem hier dargestellten Rohr 20 anpassen, werden die Seitenringe 32 oder nur ein Teil dieser Seitenringe 32, der die Dichtmittel 34, 36 umfasst, ausgetauscht. Weiterhin wird der Dorn 22 ausgetauscht. Nach Füllen des Aufnahmeraums 26 mit Wasser kann die Prüfung begonnen werden. Es ist auch möglich, dass der Prüftank 24 relativ zum Rohr 20 verschoben wird. Dadurch wird ein Transport des Rohres 20 in axialer Richtung nicht erforderlich. Das Rohr 20 kann auch gedreht werden um die Achse 28.

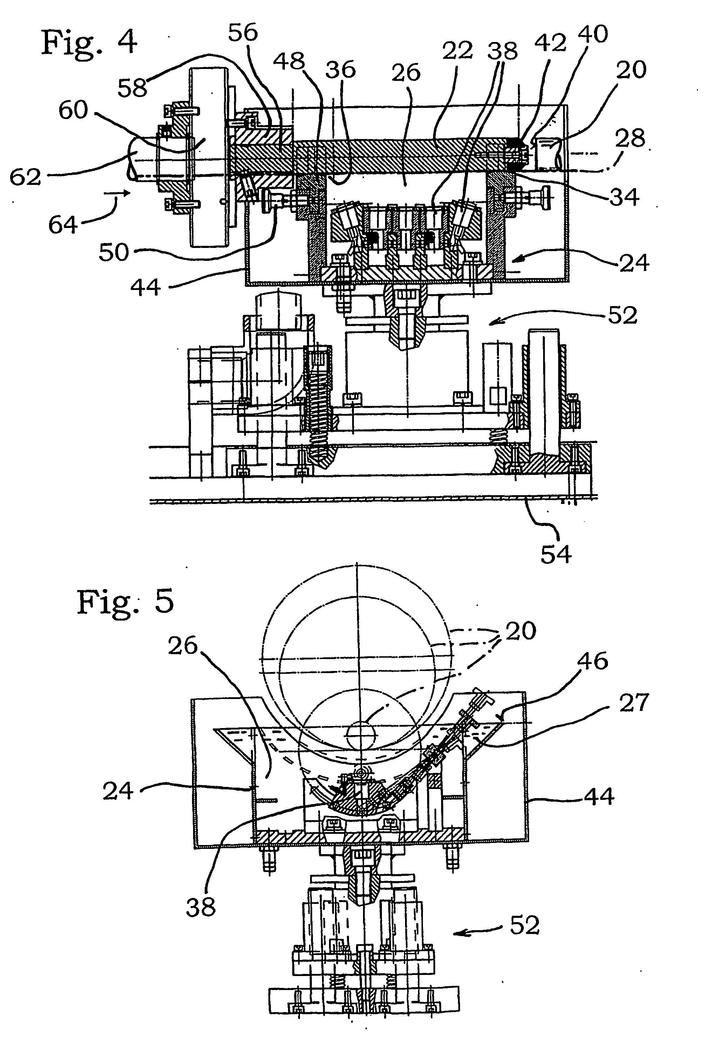

Im folgenden wird auf die Ausführungen nach den Fig. 4 und 5 eingegangen. Hierbei werden insbesondere die Merkmale beschrieben, die unterschiedlich sind, zum bisher besprochenen, prinzipiell dargestellten ersten Ausführungsbeispiel.

Im zweiten Ausführungsbeispiel werden Rohre oder andere prismatische Körper in der sogenannten Pfützentechnik geprüft. Bei dieser müssen sich die Prüfköpfe 38 notwendigerweise unterhalb des zu prüfenden Rohres 20 befinden. Sie sind in einer nach oben offenen Wanne angeordnet, die hier den Prüftank 24 ausbildet. Sie ist von einer Auffangwanne 44 umgeben, die hier höhere Wände als der Prüftank 24 hat. Die Auffangwanne 44 ist so ausgeführt, dass sie alles Wasser 27, was über einen oberen Rand 46 des Prüftanks 24 strömt, auffängt. Der obere Rand 46 legt zu gleich den Wasserspiegel fest, bis zu dem der Prüftank 24 mit Wasser gefüllt ist.

In Richtung der Prüflinie 28 wird der Prüftank 24 durch austauschbare Abschlussteile 48 begrenzt. Um sie auszutauschen muss jeweils eine Schraube 50 entfernt werden. Diese Anschlussteile 48 tragen die Dichtmittel 34 bzw. 36. Die Anschlussteile 48 haben eine U-förmige, nach oben offene Ausnehmung für die Aufnahme des Rohrs 20 bzw. des Dorns 22.

Im Gegensatz zur Ausführung nach den Fig. 1 bis 3 ist die Prüflinie 28 nunmehr durch die unterste Mantellinie des Rohrs 20 bzw. des Dorns 22 bestimmt. Durch diese Definition ändert sich die Prüflinie 28 nicht mit sich änderndem Durchmessers des Dorns 22 bzw. Rohrs 20. Dies ist aus Fig. 5 ersichtlich, wo drei unterschiedliche Außendurchmesser von Rohren strichpunktiert dargestellt sind.

Wie in Fig. 1 schließt in Fig. 4 allein der Dorn 22 den Prüftank 24 axial, also in Richtung der Prüflinie ab. In diesem Zustand kann nun ein Rohr 20 an den Dorn 22 angekoppelt werden, ohne dass es zum Verlust von Ankopplungsflüssigkeit kommt. In Fig. 4 ist ein Rohr 20, das noch nicht in Kontakt mit dem Dorn 22 ist, angedeutet.

Es sind insgesamt fünf Prüfköpfe 38 vorgesehen, die unterschiedlichen Aufgaben zugeordnet sind. Sie können in einem gewissen Maße um die Sechs-Uhr-Position verstellt werden, hierzu ist eine Verstelleinrichtung vorgesehen, auf die nicht näher eingegangen wird, da sie Stand der Technik ist.

Der Prüftank 24 mit seiner Auffangwanne 44 ist auf einem dämpfenden Untergestell 52 angeordnet, das hier nicht näher beschrieben werden muss, es ist Stand der Technik.

Dieses Untergestell 52 ist wiederum auf einem Tisch 54 angeordnet. Dieser kann stationär sein, er kann aber auch in Richtung der Prüflinie verschiebbar sein und/oder vertikal einstellbar sein.

Der Dorn 22 hat an seinem linken Endbereich einen Spannbereich 56 mit einer Spannvertiefung. Dieser Spannbereich 56 wird von einem Halteteil 58 umgriffen. Dieses wiederum ist in Drehverbindung mit einem Ausgleichsteil 60. Dieses Angleichsteil 60 beinhaltet eine Exzenterkupplung. Auf diese Weise kann die Achse des Rohres 20 bzw. des Dorns 22 in einem gewissen Maße aus der Ideallinie eines völlig zylindrischen Körpers auswandern, ohne dass dies zu einer Änderung auf der anderen Seite des Ausgleichsteiles 60 führt.

Bei der Prüfung laufen entsprechende Vorgänge wie im besprochenen Ausführungsbeispiel nach den Fig. 1 bis 3 ab. Auf der linken Seite des Ausgleichsteils 60 fbeindet sich eine Führungsstange, die aufgrund der Wirkung des Ausgleichsteils 60 eine ortsfeste Drehachse hat. An ihr kann ein Vorspannmittel angreifen, das eine Kraft nach rechts bewirkt, wie sie durch den Pfeil 64 angedeutet ist. Auf diese Weise wird eine Kraft erreicht, die den Dorn 22 gegen das Rohr 20 presst und eine Abdichtung im Bereich der stirnseitigen Dichtung 42 bewirkt.

Die Führungsstange 62 ist in einem nicht dargestellten Gestell gehalten. In diesem kann sie gedreht und axial in Richtung der Prüflinie 28 verschoben werden. Zusätzlich kann sie auch noch, falls dies nötig sein sollte, vertikal verstellt werden. An der Führungsstange 62 oder einer zu ihr parallelen Stange können auch verstellbare Vorsprünge angeordnet sein, die in einem festen Abstand zu dem Auftreffpunkt der Ultraschallstrahlen der Prüfköpfe 38 auf das Rohr 20 angeordnet sind. Auf diese Weise ist eine eindeutige Zuordnung zur Position der Prüfköpfe gegeben und kann die Prüfung begonnen werden, wenn sich der Übergangsbereich zwischen Dorn 22 und Rohr 20 oberhalb des jeweiligen Prüfkopfes 38 befindet.

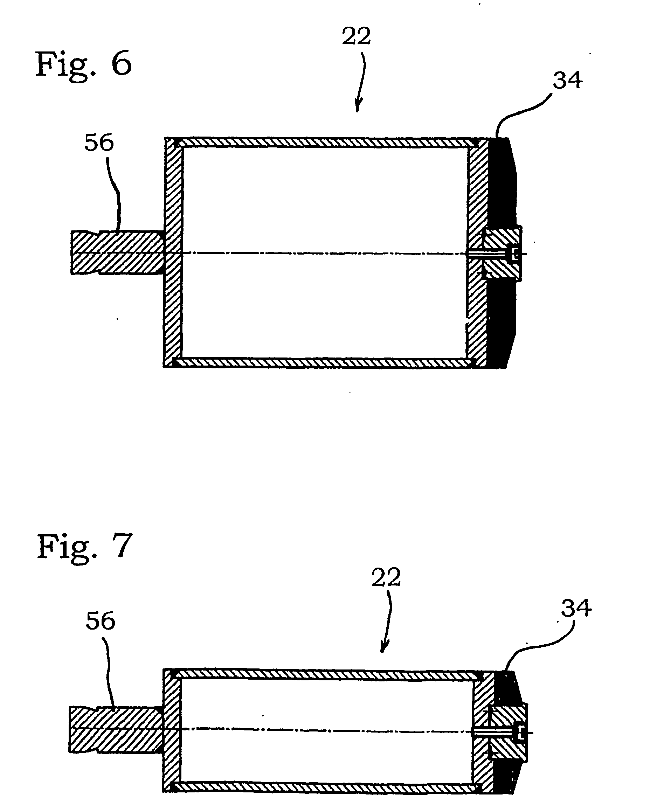

Die Fig. 6 und 7 zeigen zwei unterschiedliche Dorne 22. Der Dorn 22 nach Figur 6 ist relativ dick. Übereinstimmend ist jeweils der Spannbereich 56. Der Dorn 22 nach Fig. 7 hat einen deutlich geringeren Querschnitt als derjenige nach Fig. 6. Die Gesamtlänge der unterschiedlichen Dorne 22 ist konstant, dies ist aber nicht notwendig. Die Länge der Dorne 22 muss nur so ausreichend sein, dass beide Endbereiche des Prüftanks 24 abgedichtet werden können.

## Patentansprüche

1. Vorrichtung zur Rohrprüfung mittels Ultraschall, insbesondere zur Prüfung von Endbereichen eines Rohrs, mit mindestens einem Ultraschallprüfkopf (38)
- mit einem Prüftank (24), a) der einen Aufnahmeraum (26) hat, welcher zur Aufnahme einer Ankopplungsflüssigkeit, insbesondere Wasser (27), bestimmt ist, b) der eine axiale Passage ausbildet, durch welche ein zu prüfendes Rohr (20) entlang einer Prüflinie (28) relativ zum Prüftank (24) transportiert werden kann, c) der frontseitige und endseitige Dichtmittel (34, 36) hat, die dem Außendurchmesser des zu prüfendem Rohrs (20) angepasst sind und die den Aufnahmeraum (26) begrenzen, und d) der den mindestens einen Prüfkopf (38) aufnimmt, so dass sich zwischen Prüfkopf (38) und zu prüfendem Rohr (20) nur Ankopplungsflüssigkeit befindet und
- mit einem zylindrischen Dorn (22), der in seinem Außendurchmesser dem Außendurchmesser des zu prüfenden Rohres (20) angepasst ist,
**dadurch gekennzeichnet, dass** der Dorn (22) an einer frontseitigen Stirnseite eine stirnseitige Dichtung (42) hat, mit der er in dichtendem Kontakt mit einer ersten Stirnseite des zu prüfenden Rohrs (20) ist, und dass der Dorn (22) eine Länge hat, die größer ist als der lichte Abstand der beiden Dichtmittel (34, 36).

2. Vorrichtung nach Anspruch 1, **dadurch gekennzeichnet, dass** der Prüftank (24) eine nach oben offene Wanne ist, die bis zu einem Flüssigkeitsspiegel mit Ankopplungsflüssigkeit gefüllt ist, und dass das zu prüfende Rohr (20) teilweise in die Ankopplungsflüssigkeit eintaucht, und vorzugsweise die Rohrachse oberhalb des Flüssigkeitsspiegels bleibt.

3. Vorrichtung nach Anspruch 1, **dadurch gekennzeichnet, dass** der Prüftank (24) ein geschlossener Behälter ist, der mit Ankopplungsflüssigkeit gefüllt ist und dass das zu prüfende Rohr (20) außen vollständig mit Ankopplungsflüssigkeit umgeben ist.

4. Vorrichtung nach Anspruch 1, **dadurch gekennzeichnet, dass** die Dichtmittel (34, 36) lösbar am Prüftank (24) angeordnet sind.

5. Vorrichtung nach Anspruch 1, **dadurch gekennzeichnet, dass** der Dorn an seiner anderen Stirnseite einen Spannbereich (56) hat, und dass ein Halteteil (58) für den Dorn (22) vorgesehen ist, das ein Spannmittel aufweist, das mit dem Spannbereich (56) des Dorns (22) zusammenwirkt.

6. Vorrichtung nach Anspruch 5, **dadurch gekennzeichnet, dass** das Halteteil (58) relativ zum Prüftank (24) in Richtung der Prüflinie (28) verschiebbar angeordnet ist.

7. Vorrichtung nach Anspruch 5, **dadurch gekennzeichnet, dass** das Halteteil (58) und mit ihm der Dorn (22) drehbar angeordnet sind.

8. Vorrichtung nach Anspruch 5, **dadurch gekennzeichnet, dass** das Halteteil (58) ein Vorspannmittel aufweist, das in Richtung der Prüflinie (28) eine axiale Kraft auf den Dorn (22) ausübt, dass das zu prüfende Rohr (20) in einer Transportvorrichtung gehalten ist, und dass durch die axiale Kraft die stirnseitige Dichtung (42) des Dorns (22) so gegen die erste Stirnseite (40) des zu prüfenden Rohrs (20) gedrückt wird, dass ein dichter Abschluss erreicht wird.

9. Vorrichtung nach Anspruch 5, **dadurch gekennzeichnet, dass** das Halteteil (58) vertikal und damit quer zur Prüflinie (28) relativ zum Prüftank (24) höhenverstellbar ist.

10. Vorrichtung nach Anspruch 1, **dadurch gekennzeichnet, dass** das zu prüfende Rohr (20) in einer Transportvorrichtung gehalten ist, die einerseits einen Transport des Rohrs (20) in Richtung der Prüflinie (28) und andererseits eine Drehung des Rohres (20) um seine Rohrachse ermöglicht.

## Claims

1. A device for inspecting pipes using ultrasound, in particular for the inspection of end portions of a pipe
- comprising at least one ultrasonic probe (38), and having
- an inspection tank (24) which a) has a receiving chamber (26) for receiving a probe-to-specimen contact liquid, in particular water (27), b) defines an axial passage through which a pipe (20) that is to be inspected can be transported along an inspection line (28) relative to the inspection tank (24), c) is provided with front-side and rear-side sealing means (34, 36) which are adapted to the external diameter of the pipe (20) that is to be inspected and which delimit the receiving chamber (26), and d) receives the at least one probe (38) so that probe-to-specimen contact liquid is only found between the probe (38) and the pipe (20) that is to be inspected, and
- a cylindrical mandrel (22) the external diameter of which is adapted to the external diameter of the pipe (20) that is to be inspected
**characterized in that** the mandrel (22) has a front-side sealing (42) located at a front-side face, by which the mandrel (22) is in sealing contact with a first front side of the pipe (20) that is to be inspected and that the mandrel (22) has a length that is greater than the clearance of the two sealing means (34, 36).

2. A device according to Claim 1 **characterized in that** the inspection tank (24) is a trough which is open at the top and is filled with probe-to-specimen contact liquid up to a liquid level and that the pipe (20) that is to be inspected is partly immersed in the probe-to-specimen contact liquid and the pipe axis preferably remains above the liquid level.

3. A device according to Claim 1 **characterized in that** the inspection tank (24) is a closed container which is filled with probe-to-specimen contact liquid and that the outside of the pipe (20) that is to be inspected is completely surrounded by probe-to-specimen contact liquid.

4. A device according to Claim 1 **characterized in that** the sealing means (34, 36) are detachably arranged at the inspection tank (24).

5. A device according to Claim 1 **characterized in that** the mandrel is provided with a clamping area (56) at its other front side and that a holding device (58) is provided for the mandrel (22) which comprises a clamping device which interacts with the clamping area (56) of the mandrel (22).

6. A device according to Claim 5 **characterized in that** the holding device (58) is arranged movably relative to the inspection tank (24) in the direction of the inspection line (28).

7. A device according to Claim 5 **characterized in that** the holding device (58) and with it the mandrel (22) are rotatably arranged.

8. A device according to Claim 5 **characterized in that** the holding device (58) comprises a biasing device which exerts an axial force on the mandrel (22) in the direction of the inspection line (28), that the pipe (20) that is to be inspected is held in a transportation device and that the front-side sealing (42) of the mandrel (22) is pressed by the axial force against the first front side (40) of the pipe (20) that is to be inspected in such a manner that a tight sealing is achieved.

9. A device according to Claim 5 **characterized in that** the height of the holding device (58) is adjustable vertically and thus transversely to the inspection line (28) relative to the inspection tank (24).

10. A device according to Claim 1 **characterized in that** the pipe (20) that is to be inspected is held in a transportation device which, on the one hand, facilitates transportation of the pipe (20) in the direction of the inspection line (28) and, on the other hand, rotation of the pipe (20) around its pipe axis.

## Revendications

1. Dispositif pour contrôler des tuyaux au moyen d'ultrasons, en particulier pour contrôler des zones d'extrémité d'un tuyau, comprenant au moins un palpeur à ultrasons (38),
- avec un réservoir de contrôle (24), a) qui présente une chambre de réception (26) destinée à recevoir un liquide de couplage, en particulier de l'eau (27), b) qui forme un passage axial (28) à travers lequel un tuyau à contrôler (20) peut être transporté le long d'une ligne de contrôle (28) par rapport au réservoir de contrôle (24), c) qui présente des moyens d'étanchéité frontaux et terminaux (34, 36) qui sont adaptés au diamètre extérieur du tuyau à contrôler (20) et qui limitent ladite chambre de réception (26), et d) qui reçoit ledit au moins un palpeur (38) de sorte qu'entre le palpeur (38) et le tuyau à contrôler (20) se trouve seulement du liquide de couplage, et
- avec un mandrin cylindrique (22) dont le diamètre extérieur est adapté au diamètre extérieur du tuyau à contrôler (20),
**caractérisé par le fait que** ledit mandrin (22) présente sur une face frontale un joint d'étanchéité frontal (42) avec lequel il est en contact étanche avec une première face du tuyau à contrôler (20), et que le mandrin (22) présente une longueur qui est supérieure à l'écartement des deux moyens d'étanchéité (34, 36).

2. Dispositif selon la revendication 1, **caractérisé par le fait que** le réservoir de contrôle (24) est une cuve ouverte vers le haut qui est remplie de liquide de couplage jusqu'à un niveau de liquide, et que le tuyau à contrôler (20) est immergé en partie dans le liquide de couplage et l'axe du tuyau reste de préférence au-dessus du niveau de liquide.

3. Dispositif selon la revendication 1, **caractérisé par le fait que** le réservoir de contrôle (24) est un réservoir fermé qui est rempli de liquide de couplage, et que le tuyau à contrôler (20) est entouré à l'extérieur complètement de liquide de couplage.

4. Dispositif selon la revendication 1, **caractérisé par le fait que** les moyens d'étanchéité (34, 35) sont disposés de manière amovible sur ledit réservoir de contrôle (24).

5. Dispositif selon la revendication 1, **caractérisé par le fait que** l'autre face du mandrin est pourvue d'une zone de serrage (56), et que l'on prévoit un dispositif de maintien (58) pour le mandrin (22), qui présente un moyen de serrage qui agit de concert avec ladite zone de serrage (56) du mandrin (22).

6. Dispositif selon la revendication 5, **caractérisé par le fait que** le dispositif de maintien (58) est disposé de manière à pouvoir être déplacé par rapport au réservoir de contrôle (24) dans le sens de la ligne de contrôle (28).

7. Dispositif selon la revendication 5, **caractérisé par le fait que** le dispositif de maintien (58) et avec celui-ci le mandrin (22) sont disposés de manière rotative.

8. Dispositif selon la revendication 5, **caractérisé par le fait que** le dispositif de maintien (58) présente un moyen de précontrainte qui exerce une force axiale sur le mandrin (22) dans la direction de la ligne de contrôle (28), que le tuyau à contrôler (20) est maintenu dans un dispositif de transport, et que, dû à la force axiale, le joint d'étanchéité frontal (42) du mandrin (22) est plaqué contre la première face (40) du tuyau à contrôler (20) de manière à obtenir une fermeture étanche.

9. Dispositif selon la revendication 5, **caractérisé par le fait que** le dispositif de maintien (58) est réglable en hauteur verticalement et ainsi transversalement à la ligne de contrôle (28) par rapport au réservoir de contrôle (24).

10. Dispositif selon la revendication 1, **caractérisé par le fait que** le tuyau à contrôler (20) est maintenu dans un dispositif de transport qui permet d'un côté un transport du tuyau (20) dans la direction de la ligne de contrôle (28) et de l'autre côté une rotation du tuyau (20) autour de son axe de tuyau.
